# EUROPEAN PATENT APPLICATION

(11) **EP 0 636 512 A1**
(43) Date of publication of application: **01.02.1995**
(21) Application number: 94201054.7
(22) Date of filing: 18.04.1994
(51) Int. Cl.: B60N 2/38, B60N 2/14

(54) **Seat foundation**

(30) Priority: 02.06.1993 SE 9301899
(71) Applicant: FIRMA LARS BRUUN, S-682 21 Filipstad (SE)
(72) Inventor: Bruun, Lars, S-682 34 Filipstad (SE)
(74) Representative: Hynell, Magnus

(57) **Abstract**

Foundation for seats in vehicles, comprising mechanisms for compensating for the tilt of the vehicle cab in at least one plane, so that a mounting plate or equivalent, on which the seat or its underframe is intended to be mounted, is always held essentially horizontal in the said plane, comprising a linkage (5) between the mounting plate (4) and a base unit (2), said linkage comprising a first link (30) and a second link (31), said links via upper and lower joints (33, 37 and 32, 36, respectively) being pivotally connected to the mounting plate (4) and to the base unit (2).The distance between the axes of rotation of the upper joints (33, 37) is shorter than the distance between the axes of rotation of the lower joints (32, 36). The foundation also comprises at least one motive mechanism (6) which is operative between one of said links and the base unit (2) for pivoting the links in said upper and lower joints in said plane when the tilt of the vehicle in said plane changes, the mounting plate being maintained in a horizontal position, whilst being at the same time displaced in the same direction as a tilt variation.

## Description

### TECHNICAL FIELD

The invention relates to a foundation for seats in vehicles, especially in cross-country work vehicles, comprising mechanisms for compensating for the tilt of the vehicle cab in at least one plane, so that a mounting plate or equivalent, on which the seat or its underframe is intended to be mounted, is always held essentially horizontal in the said plane, comprising a linkage between the mounting plate and a base unit, said links via upper and lower joints being pivotally connected to the mounting plate and to the base unit, respectively. The invention relates also to a system for automatic manoeuvring of the seat foundation.

### PRIOR ART

The driver's cab in cross-country work vehicles is a problematic workplace from the ergonomic viewpoint. One of these problems concerns the levelling of the driver's seat if the seat is at all equipped with levelling devices. Another problem concerns the stresses in the lateral direction to which the driver is exposed when the vehicle pitches. Whilst the human body is well equipped to withstand shocks in the vertical direction, the body has poor self-defence, in fact, against stresses in the lateral direction. A typical feature of systems hitherto proposed for levelling of the driver's seating is that although there has been some success in solving the levelling problems themselves, the problems which are linked with the said lateral stresses have not be solved. A further typical feature is that the driver, by virtue of the levelling motions of the seat foundation, has been displaced very much in the lateral direction relative to the driver's cab, so that the field of vision of the driver changes very dramatically whilst he is driving. The Swedish patent No. 367 358 shows a system of this type. Another adverse effect of conventional levelling systems is that the vertical position of the driver also changes, thereby also altering the field of vision. It is also known in the art, e.g. through the US patent No. 3 632 076, to provide a self-leveling seat assembly having rollers and arcuate trac guides securing the seat to a support and providing limited movement of the seat relative to the support along an arc of circle in response to a tilt of a vehicle cab. A drawback of an assembly of this type is that it requires much space in the driver's cabin, and another drawback is that the rolling action requires substantial play.

### BRIEF DISCLOSURE OF THE INVENTION

The object of the invention is to provide a seat foundation which, in relation to the prior art, is an improvement with regard to the abovementioned problems. These and other aims can be achieved therein that the invention is characterezed by what is specified in the subsequent patent claims.

Further aims and characteristics of the invention can be derived from the following description of a preferred embodiment.

### BRIEF DESCRIPTION OF DRAWINGS

In the following description of a preferred embodiment, it is presumed - unless otherwise stated - that the seat foundation is set to compensate for pitches (tilting) of the vehicle in the lateral direction. In the drawings,
- Fig. 1: shows the foundation in a perspective view, obliquely from the back-right,
- Fig. 2: shows the foundation in a perspective view, obliquely from the front-left,
- Figs. 3-5: show the foundation from the back in normal position, left lateral tilt position and right lateral tilt position,
- Fig. 6: shows, diagrammatically, a hydraulic and control system for automatic manoeuvring of the motive mechanisms of the foundation, and
- Figs. 7-9: show, diagrammatically, how the seat is orientated relative to the driver's cab in the normal position and left and right lateral tilt positions of the vehicle.

### DETAILED DESCRIPTION OF AN EMBODIMENT

The main components of the seat foundation F are a foundation fastening element or baseplate 1, a base unit denoted generally by 2, a unit which is referred to as the carrier unit (carrier) or carrier plate 3, a unit 4 for mounting the seat 7 (also inclusive of an underframe 8) onto the foundation and which, according to the embodiment, has the form of a plate and is therefore referred to as the mounting plate 4, a linkage 5 (linkage system) and motive mechanisms 6 for the linkage 5.

The foundation fastening element or baseplate 1 comprises, according to the embodiment, a flat plate, but can also have a different shape suitable for fixing the foundation in the driver's cab of a work vehicle, preferably a cross-country work vehicle, expediently to the floor of the driver's cab.

The central part of the base unit consists of a plate 10. On either side, the plate 10 has a pair of longitudinal side pieces 11A, 11B, where A here and hereinafter denotes rear, whilst B denotes front elements. From the left side of the plate 10, a projection 12 in the form two parallel platings 13A, 13B extends out to the left. From the left edge of the plate 10, directly in front of the front plating 13B of the projection 12, a plating piece 14, welded to the plate 10, extends upwards from the plate 10, tilting inwards somewhat towards the centre of the plate 10.

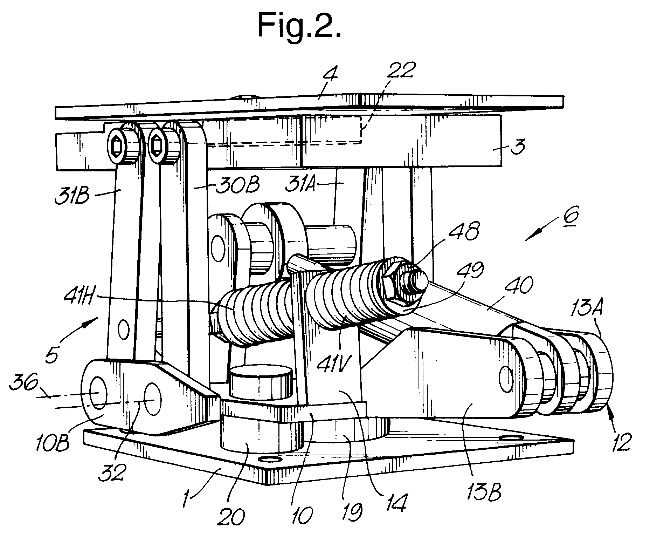

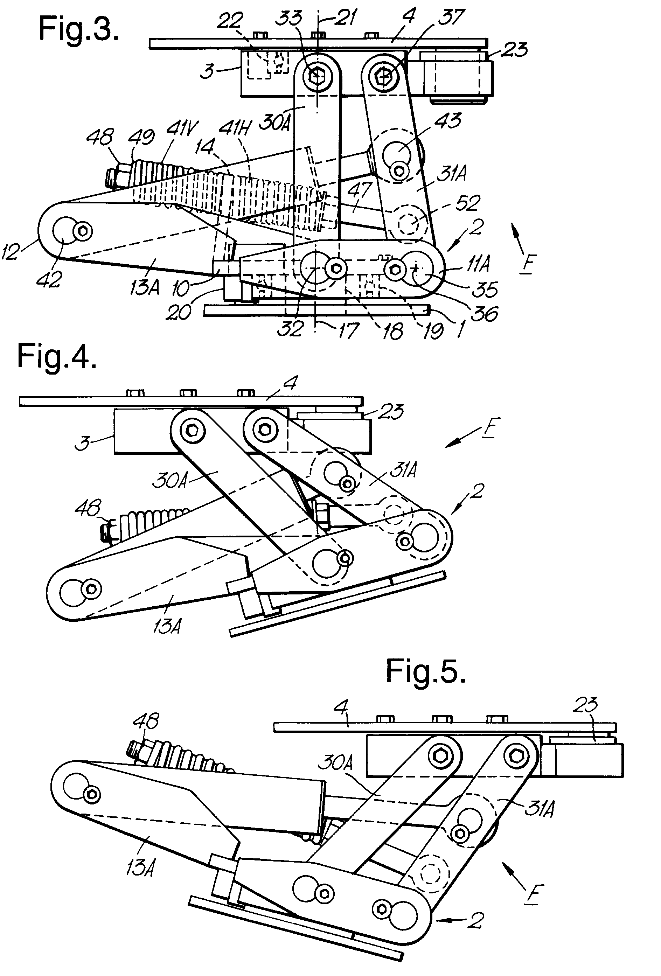

The base unit 2 (and hence the parts mounted on the base unit, such as the linkage 5, the motive mechanisms 6 etc.) are rotatably movable relative to the baseplate 1 about a centre axis 17, which is vertical in the normal position of the driver's cab. The baseplate 1 is herein provided with an upwardly directed bearing journal 18, Fig. 3, which is clamped in place in the inner ring of a ball bearing 19, Fig. 2, the outer ring of which is fixed to the bottom side of the plate 10 of the base unit 2. In order to lock the base unit 2 securely in desired positions relative to the baseplate 1, there is a lower locking mechanism 20, namely a hydraulic disc brake, the hydraulic cylinder of which is mounted on the base unit 2 and acts against the plate 1, which herein also functions as a brake disc. As a result of this locking action, the ball bearing 19 is axially stressed, whereby any play between the base unit 2 and the baseplate 1 is also eliminated.

In the same way as the base unit 2 with the plate 10 is rotatably movable relative to the baseplate 1 about a centre axis 17, the mounting plate 4 is rotatably movable relative to the carrier plate 3 about a centre axis 21. Recessed in the carrier plate 3 is a ball bearing 22, Fig. 3, and on the mounting plate 4 there is an axle journal (not shown), which extends down, with fit, into the inner ring in the ball bearing 22. There is additionally an upper locking mechanism 23 comprising a hydraulic disc brake, the hydraulic cylinder of which is mounted in the carrier plate 2 and is arranged to act upon the mounting plate 4, the bottom side of which is designed as a brake disc. By means of the axially acting, upper locking mechanism 23, play is therefore also prevented in the ball bearing 22 between the carrier plate 3 and the mounting plate 4.

The linkage 5 essentially comprises a first link or primary link 30 and a second link or auxiliary link 31. The primary link 30 comprises, in turn, a rear and a front link arm. These are identically designed and are pivotally movable at their lower and upper ends relative to the base unit 2 and carrier plate 3 respectively. The primary link 30 is therefore pivoted at its lower end about a lower, left centre axis 32 and pivoted at the top about an upper, left centre axis 33.

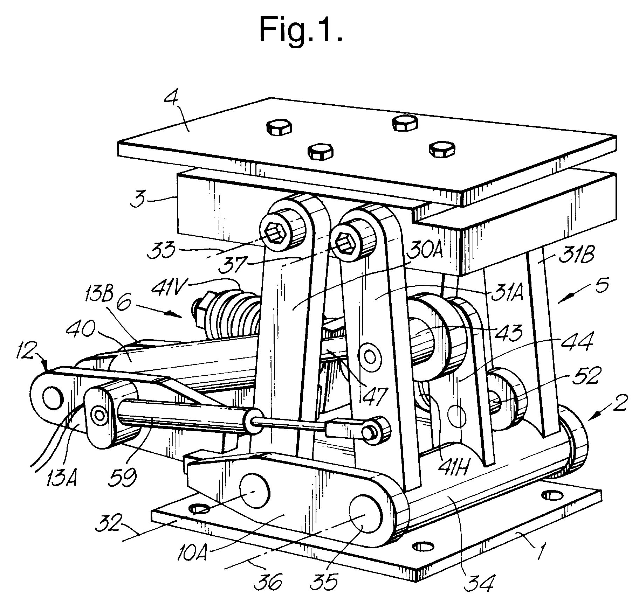

The auxiliary link 31 comprises a rear and a front link arm 31A, 31B, defined by projections on a bearing sleeve 34, Fig. 1. Through the bearing sleeve 34 there extends a bearing journal 35 which, at its ends, is fixed in the side pieces 11A, 11B on the plate 10. At their upper ends, the link arms 31A, 31B, and hence the link 31 in its entirety, are pivotally connected to the carrier plate 3. The auxiliary link 31 can thus be pivoted relative to the base unit 2 and relative to the carrier plate 3 about a lower, right centre axis 36 and an upper, right centre axis 37 respectively.

According to the embodiment, the primary link 30 and the auxiliary link 31 are of equal length, i.e. the distance between the lower, left centre axis 32 and the upper, left centre axis 33 is equally as long as between the lower, right centre axis 36 and the upper, right centre axis 37. On the other hand, the distance between the two lower centre axes 32 and 36 is greater than the distance between the two upper centre axes 33 and 37. This means that the primary link 30 and the auxiliary link 31 are not parallel. The auxiliary link 31 thus tilts inwards towards the primary link 30 when the latter is standing vertically, which it does in its normal position, Fig. 3. In this normal position, moreover - according to the embodiment - the centre axis 21 of the upper ball bearing 22 coincides with the centre axis 17 of the lower ball bearing and of the axle journal 18, these centre axes simultaneously intersecting the lower and upper central axes 32 and 34 of the primary link at right angles. It is nevertheless conceivable to displace the vertical centre axes 17 and 21 sideways from the vertical plane through the centre axes 32 and 33 in the normal position ofthe seat foundation, Fig. 3.

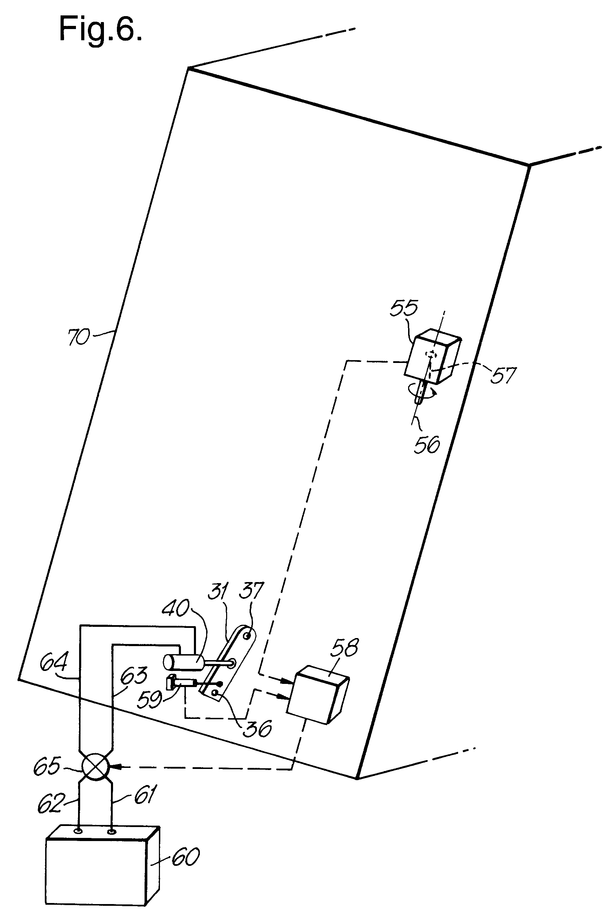

The motive mechanisms 6 comprise a double-action hydraulic cylinder 40 (the hydraulic lines being shown only in Fig. 6) and a pair of very powerful helical springs 41V and 41H which interact with the hydraulic cylinder 40 and which here act as compression springs. The rear end of the hydraulic cylinder 40 is mounted fixed to a journal 42 at the outer end of the projection 12 between the two platings 13A and 13B. The front end of the piston rod is mounted fixed to a journal 43, which extends between the rear link arm 31A of the auxiliary link 31 and a lug 44, parallel to the link arm 31A, on the bearing sleeve 34. The journal 43 extends parallel to the axes 36 and 37, somewhat closer to the upper axis 37 than to the lower axis 36.

The two springs 41V and 41H are mounted on a rod 47, which at one end is threaded and has a screwed-on nut 48 and, within this nut, a stop washer 49. The rod 47 extends through a hole in the said plating piece 14, which rises up from the plate 10 of the base unit 2, the left spring 41V being clamped in place between the stop washer 49 and the plating piece 14. Correspondingly, the right spring 41H is clamped in place between the plating piece 14 and a second stop washer 50, which is held in place by a second nut 51 which is screw-fastened on one more threaded section ofthe rod 47. By tightening of the nuts 48 and 51, the springs 41V and 41H are given a certain pretensioning when the seat foundation is in its normal position, Fig. 3. The other end of the rod 47 is pivotally connected to a journal 52, which extends between the front link arm 31B of the auxiliary link 31 and the lug 44 on the bearing sleeve 34 at a level between the journals 35 and 43.

The described levelling motions of the seat foundation can be performed fully or semi-automatically. In the latter case, the hydraulic cylinder 40 is manoeuvred by the driver using a joystick, buttons or other controls, according to the sensations of the driver regarding the tilt of the vehicle.

Where there is fully automatic manoeuvring of the seat foundation, a control system can be used of the type illustrated diagrammatically in Fig. 6. The tilt of the vehicle - more specifically of the vehicle cab 70 - in the particular vertical plane is registered by a tilt transmitter 55. This is mounted in the vehicle cab and can be rotated 90° about a rotational axis 56 which is vertical when the vehicle and the driver's cab are in normal position on flat ground. The tilt transmitter 55 contains a plumb 57 which, in each instance, provides a measure of the tilt of the vehicle cab 70 relative to the plumb line in the particular plane. This information is transmitted to a microprocessor 58, where the information can be processed as an incoming set point in the control system.

The control system also incorporates an actual-value transmitter 59 in the form of a displaceable slide with associated signal transmitter, coupled between the base unit 2, to be more precise the projection 12 of the base unit, and the auxiliary link 31 at a level between the centre axes 36 and 37. The setting of the slide/actual-value transmitter 59, expressed as its total length between the fastening points on the projection 12 and on the auxiliary link 31, provides a measure of the particular tilt of the auxiliary link 31 relative to the baseplate 1. This information is also transmitted as a signal to the microprocessor 58 for processing as an incoming actual value in connection with the control process.

There is further located in the hydraulic and control system a hydraulic pressure source 60, a pair of hydraulic lines 61 and 62, which conduct hydraulic oil to and from a proportional valve 65, and a pair of hydraulic lines 63 and 64 for supplying and withdrawing hydraulic oil to and from the hydraulic cylinder 40 in the desired direction and at the desired flow according to the setting of the proportional valve 65, which is controlled on command from the microprocessor 58, in accordance with the microprocessor program, on the basis of incoming information from the tilt transmitter 55 and the actual-value transmitter 59.

### DESCRIPTION OF HOW THE SEAT FOUNDATION OPERATES AND IS MANOEUVRED

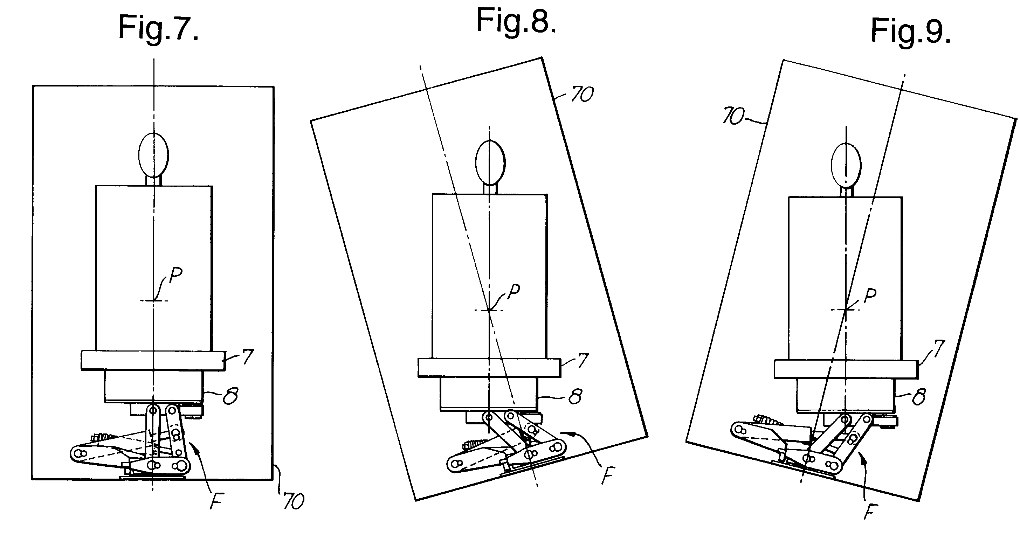

It is presumed, until further notice, that the seat foundation is set up to compensate for the tilt motions of the vehicle cab - pitching - in the lateral direction. In the normal position, Figs. 1-3 and Fig. 7, the primary link 30 stands fully vertically, the auxiliary link 31 is tilted somewhat inwards towards the primary link and the carrier plate and the mounting plate lie horizontal. During cross-country driving, the most common obstacles consist of elevations in the terrain, such as stumps, hillocks and larger-sized stones etc., whilst unevennesses in the form of deep holes, ditches and similar are more the exception. If the right wheels of the vehicle roll up an elevation, causing the vehicle cab (as diagrammatically indicated by 70 in Figs, 7-9) to tilt to the left, Fig. 8, the seat foundation according to the invention will be reset such that
- the carrier plate 3 and the mounting plate 4 revert to their horizontal alignment in the lateral direction,
- the average level of the carrier plate 3 and mounting plate 4 above the baseplate 1 is lowered, so that the elevation of the right side of the driver's cab caused by the obstacle is substantially offset, and
- the carrier plate 3 and the mounting plate 4 are displaced to the left in the driver's cab, i.e. displaced in the same direction as that in which the driver's cab 70 is tilting.

Correspondingly, the carrier plate 3 and mounting plate 4 revert to the horizontal position when the driver's cab 60 pitches to the right, Fig. 9, at a speed which is dependent upon how quickly or slowly the tilt takes place, at the same time as the carrier plate and mounting plate, and hence the seat 7, are lowered from the normal position, Fig. 7, relative to the baseplate 1, and the carrier plate 3 and mounting plate 4, and hence the seat 7, are displaced to the right. This motional pattern means that a point P on the seat and hence on the driver seated in the seat, which point P is situated a bit above the actual seating, moves minimally in both the vertical and lateral directions. This is very favourable from a number of aspects. It is particularly favourable that the stresses acting in the lateral direction upon the driver are largely reduced, since the anatomy of the human body is such that the body, above all the back, is easily injured when exposed to stresses in the lateral direction. Another very favourable effect from the ergonomic viewpoint is the lateral displacement of the driver's seat in the driver's cab, as well as the adjustment in height, which means that the field of vision of the driver is not impaired to the same degree as in conventional levelling devices where the levelling, by contrast, can result in the driver coming dangerously close to the side walls, doors or roof of the cabin at the same time as the seating is raised.

The abovementioned effects are achieved by virtue of the configuration of the linkage 5, as described above.

When the right wheels of the vehicle roll up an obstacle, therefore, so that the driver's cab 70 ends up tilting to the left, and the tilt transmitter 55 is set to register lateral tilts, the plumb 57 will give a reading and pulses (signals) relating to this reading are sent to the microprocessor 58. These signals are compared with the pulses (signals) from the actual-value transmitter 59 to the microprocessor relating to the particular setting of the seat foundation. Depending upon the magnitude of the tilt variation, the proportional valve 65 is opened to a greater or lesser degree. If the tilt, for example, shows a very dramatic increase to the left -i.e. takes place rapidly - then the valve 65 is opened to a corresponding degree, so that hydraulic oil is conducted through the hydraulic line 63 and withdrawn through the hydraulic line 64, so that the hydraulic cylinder 40 has a negative draw, i.e. draws the auxiliary link 31 to the left relatively quickly, whereupon the primary link 30 is forced to join in the pivoting motion. If the tilt variation, on the other hand, occurs slowly, the proportional valve is opened in proportion to this. If it is assumed that the starting position is the normal position shown in Fig. 7, the primary link 30 therefore will more or less rapidly depart from its vertical starting position by pivoting about its lower centre axis 32. It is appreciated that this results in the upper centre axis 33 being hereupon lowered, which results, in turn, in the carrier plate 3 and mounting plate 4 also being lowered and displaced to the left, Fig. 8. At the same time, the carrier plate and the mounting plate are also returned to a horizontal position by the choice of the relative relationships between the lengths of the links and the distances between them.

Upon the leftward turning of the auxiliary link 31, the right spring 41H is tensioned to an ever greater degree. It can be said that the spring 41H stores up the work which the hydraulic cylinder 40 performs, this being of very great importance since the force needed to manoeuvre the linkage 5 varies greatly during the different phases of the motion. For example, the force required to return the linkage from the positions shown in Figs. 8 and 9 is many times greater than to induce a motion from the normal position, Fig. 7. The return motion from the left or right is thus aided by the force stored in the right spring 41H or in the left spring 41V respectively. The springs 41H and 41V thus form part, as very important components, of the integrated motive mechanisms. Once the carrier plate 3 and the mounting plate 4 have reverted to a horizontal position, the motion is interrupted.

When the vehicle instead pitches to the right, Fig. 9, the linkage is thus rotated (pivoted) correspondingly to the right by virtue of the hydraulic cylinder 40 making a working stroke and pivoting the auxiliary link 31 to the right, so that the primary link 30 too switches over to the right, whereupon the entire seat 7 is displaced to the right and is lowered relative to the baseplate 1, whilst the carrier plate 3 and the mounting plate 4 are levelled and the left spring 41V is tensioned.

It has been assumed in the above-stated that the seat foundation is set up to compensate for lateral tilts, which is the norm, since pitches of the vehicle in the lateral direction are usually those which are most bothersome to the driver. In certain cases, tilts in the longitudinal direction can nevertheless constitute the dominant problem. The seat foundation according to the invention can also compensate for this type of tilt. For this purpose, use is made of the facility to swing those parts of the foundation which are situated above the baseplate 1, i.e. the base unit 2 and the parts mounted thereon, about the centre axis 17. To this end, the lower locking mechanism 20 is unlocked, so that the base unit 2 with the linkage 5 and the motive mechanisms 6 can be rotated 90° relative to the baseplate 1. In the same way and in the same direction, the tilt transmitter 55 is also rotated about its axis 56, this being able to executed manually by the driver or automatically. Thereafter, the seat foundation operates in the same way as described above, with the difference that it instead reacts to tilt variations in the longitudinal direction of the vehicle.

It is also possible to set the seat foundation and the tilt transmitter 55 in intermediate positions in order to compensate for tilts in both the lateral direction and the longitudinal direction.

It is also possible, at any time whatsoever, to rotate the seat 7 with its underframe 8 relative to the carrier plate 3 by releasing the upper locking mechanism 23 between the mounting plate 4 and carrier plate 3, which the driver can do by command using a key pad or similar, so that the small hydraulic piston in the hydraulic cylinder of the locking mechanism makes a return stroke, i.e. in an equivalent fashion as for the lower locking mechanism 20.

Once the engine of the vehicle is turned off and the hydraulic pressure source is gradually depressurised, or if leakage or some other defect should arise in the hydraulic system, the two powerful compression springs 41V and 41H retain or return the linkage 5 and hence the entire seat foundation in or to a neutral position, i.e. so that the carrier plate 3 and the mounting plate 4 remain in or revert to a horizontal position. The springs 41V and 41H thus have a number of very important functions.

It is important to realize that the invention can be varied within the scope of the inventive concept, such as this is defined by the subsequent patent claims. Even if a hydraulic cylinder constitutes a suitable mechanism for the rotary (pivot) motions of the linkage by virtue of the fact that it is able to generate a large force in spite of its small size, it is thus also possible, in principle, to imagine an electric motor as a motive mechanism. In this case also, the two powerful springs can form part of the system for essentially compensating for different force requirements during different phases of the pivot motions of the linkage.

It can also be asserted that the foundation, even devoid of an active motive mechanism such as a hydraulic cylinder or electric motor, but having a linkage according to the above and having the compression springs forming part of the linkage, constitutes a patentable invention. Even if such a foundation cannot actively compensate for tilting of the vehicle and/or driver's cab, it does exert a damping effect upon lateral motions which are transmitted from the vehicle to the driver's seat and can signify, for this function, a valuable improvement of the environment in all types of work vehicles, such as agricultural tractors, contract machinery and also in cross-country vehicles. The applicant of this patent therefore reserves the right to partition off this invention from the present application and to direct patent claims at a foundation having linkage and springs in combination according to the present invention, but devoid of active motive mechanisms.

## Claims

1. Foundation for seats in vehicles, comprising mechanisms for compensating for the tilt of the vehicle cab in at least one plane, so that a mounting plate or equivalent, on which the seat or its underframe is intended to be mounted, is always held essentially horizontal in the said plane, comprising a linkage (5) between the mounting plate (4) and a base unit (2), said linkage comprising a first link (30) and a second link (31), said links via upper and lower joints (33, 37 and 32, 36, respectively) being pivotally connected to the mounting plate (4) and to the base unit (2), respectively, **characterized** in that the distance between the axes of rotation ofthe upper joints (33, 37) is shorter than the distance between the axes of rotation ofthe lower joints (32, 36) and that the foundation also comprises at least one motive mechanism (6) which is operative between one of said links and the base unit (2) for pivoting the links in said upper and lower joints in said plane when the tilt of the vehicle in said plane changes, the mounting plate being maintained in a horizontal position, whilst being at the same time displaced in the same direction as a tilt variation.

2. Foundation according to claim 1, **characterized** in that the first link (30) stands vertically in the normal position of the linkage, in that the second link (31) is equally or at least essentially equally as long as the first link, calculated between the centre axes in the rotational joints of the respective links, and in that it tilts inwards towards the first link.

3. Foundation according to any of claims 1-2, **characterized** in that the said first and second links each comprise at least two mutually parallel link arms (30A, 30B and 31A, 31B respectively).

4. Foundation according to any one of claims 1-3, **characterized** in that the said motive mechanisms comprise, on the one hand, a hydraulic cylinder, which functions between the base unit (2) and one of the said first and second links between the upper and lower rotational axes of this link, and, on the other hand, spring mechanisms (41V, 41H), which are arranged to be successively tensioned when the first link (30) is pivoted from its vertical normal position by means of the hydraulic cylinder.

5. Foundation according to claim 4, **characterized** in that the said spring mechanism comprises two spring elements arranged such that each is tensioned when the first link is pivoted in either direction from its normal vertical position.

6. Foundation according to any one of claims 4 and 5, **characterized** in that the hydraulic cylinder and the said spring mechanism function between the base unit (2) and the said second link (31).

7. Foundation according to any one of claims 1-6, **characterized** in that the base unit (2) is rotatable relative to a foundation fastening element (1) about a rotational axis (17) which is vertical in the normal position of the vehicle cab, and in that lower locking mechanisms (20) are arranged to connect detachably together the said base unit and the said foundation fastening element in desired positions, whereby the seat foundation can be set so as to compensate for lateral tilt of the vehicle cab or tilt in the longitudinal direction or in positions therebetween.

8. Foundation according to any one of claims 1-7, **characterized** in that the upper ends of the first and second links are pivotally connected to a carrier unit (3), which, in turn, is rotatably connected to the mounting plate (4), and in that upper locking mechanisms (23) are disposed between the carrier unit (3) and the mounting plate (4) for detachable connection of the carrier unit (3) and the mounting plate (4) in desired positions.

9. Control system for automatic manoeuvring of the seat foundation (F) according to any one of claims 1-8, **characterized** by a position transmitter (55) for registering the tilt of the vehicle cab (70) in the particular plane in relation to ground level, an actual-value transmitter (59), which registers the rotational position of the linkage (5) relative to the base unit (2), a microprocessor (58) for processing information from the said position transmitter and the said actual-value transmitter, and a proportional valve (65) in the hydraulic line system between a hydraulic pressure source (60) and the said hydraulic cylinder (40) for manoeuvring of the linkage (5), which proportional valve is arranged to control the supply of hydraulic medium to the hydraulic cylinder in dependence upon the microprocessor (58) program and the processed information from the position transmitter (55) and actual-value transmitter (59).
